# EUROPEAN PATENT SPECIFICATION

(11) **EP 3 127 956 B1**
(45) Date of publication and mention of the grant of the patent: **08.05.2019**
(21) Application number: 15774413.7
(22) Date of filing: 31.03.2015
(51) Int. Cl.: C08L 5/00, C08K 5/16, C08J 5/00, C09J 105/00

(54) **AQUEOUS BINDER COMPOSITION AND METHOD FOR BINDING FIBROUS MATERIAL USING SAME**
WÄSSRIGE BINDEMITTELZUSAMMENSETZUNG UND VERFAHREN ZUR BINDUNG VON FASERMATERIAL DAMIT
COMPOSITION AQUEUSE DE LIANT ET PROCÉDÉ POUR LIER DE LA MATIÈRE FIBREUSE L'UTILISANT

(30) Priority: 31.03.2014 KR 20140037558
(43) Date of publication of application: 08.02.2017
(73) Proprietor: Kcc Corporation, Seoul 137-703 (KR)
(72) Inventor: HONG, Seung Min, Hwaseong-si Gyeonggi-do 445-723 (KR); KIM, Yong Joo, Yongin-si Gyeonggi-do 448-130 (KR); JEONG, Young Gi, Anyang-si Gyeonggi-do 430-826 (KR)
(74) Representative: Wohlfahrt, Jan Günther
(86) International application number: PCT/KR2015/003173
(87) International publication number: WO 2015/152607

(56) References cited:
- WO-A2-2007/014236
- JP-A- 2012 036 369
- KR-B1- 910 007 628
- US-A1- 2012 037 836
- US-A1- 2012 135 152
- US-A1- 2013 125 783

## Description

### [Technical Field]

The present invention relates to an aqueous binder composition and a method for binding fibrous materials by using the same, and more specifically, relates to an aqueous binder composition and a method for binding fibrous materials by using the same comprising one or more reducing sugars, one or more amino acids, and one or more ionic compounds including metal cation having oxidation number of 2 or higher. The present invention provides the same or better physical properties with lower price compared to traditional phenol formaldehyde resin (PFR), does not include or release toxic materials such as formaldehyde or phenol, and may decrease intoxication which is a vulnerable point of traditional PFR during manufacturing and remarkably enhances the mechanical properties such as water resistance, tensile strength and hardness of the manufactured product.

### [Background Art]

PFR has been widely used as a binder for adhesion of fibrous materials, such as glass wool and rock wool, since it is inexpensive but has outstanding physical properties. However, PFR releases formaldehyde, a carcinogenic agent, not only during the manufacturing process but even after application, and phenol is also a toxic material which may cause harmful effects as the unreacted reacting material is continuously exposed to the external environment.

In an improvement of this, Korean Registered Patent No. 240044 discloses adhesives mainly consisting of pullulan and sugars derived from natural sources and molded materials that contain the same. Still, adhesives disclosed in this patent cannot be facilitated as a binder since the degree of cure is too poor to obtain sufficient physical properties, such as water resistance.

US Laid-open Patent Publication No. 2012-0133073 discloses the use of melanoidin and polyester polymer, which is formed by molasses and polybasic acid at a high temperature. However, due to the inherent feature of molasses itself, its weak point is that the type and content of the components cannot be managed uniformly.

Korean Laid-open Patent Publication No. 1999-0037115 discloses a binder composition wherein is performed curing of bake-esterification using polysaccharide and multifunctional compound with carboxylic group. However, it has problems since sufficiently high temperature and curing time are necessary, as the reaction rate of ester condensation reaction between carboxylic acid and hydroxyl group of polysaccharide is too slow.

Korean Laid-open Patent Publication No. 2008-0049012 discloses adhesive which includes Maillard reactants such as neutralized multifunctional acid compound and reducing sugar. However, weak points exist, since sufficient hardness is not easily obtained after curing reaction at a high temperature, and when immersed in water, brown compounds which are water-soluble with low molecular weight are eluted.

Korean Laid-open Patent Publication No. 2010-0065273 discloses adhesive which forms heat-curable polymer water-insoluble by Maillard reaction and ester condensation reaction processing a high temperature curing, using 5% or more of ammonium salt as acid precursor by dry weight to the reducing sugar. However, since plenty of ammonium salt as acid precursor which is hydrophilic is used much, sufficient hardness is not easily obtained after curing reaction at a high temperature due to hydrophilic unreacted reacting materials, and when immersed in water, brown compounds which are water-soluble with low molecular weight are edited. WO/2007014236 describes a binder composition containg a sugar and an ammonium compound.

### [Detailed Description]

### [Technical Purpose]

The purpose of the present invention is to provide aqueous binder composition and method for binding fibrous materials by using the same with same or better physical properties with lower price compared to traditional phenol formaldehyde resin (PFR), does not include or release toxic materials such as formaldehyde or phenol, and may decrease intoxication which is a vulnerable point of traditional PFR during manufacturing and remarkably enhances the mechanical properties such as water resistance, tensile strength and hardness of the manufactured product.

### [Technical Solution]

Thus, the present invention provides aqueous heat-curable binder composition comprising one or more reducing sugars, one or more amino acids, and one or more complex compounds of metal cation having oxidation of 2 or higher in the form of ammonium salt.

In another aspect, the present invention provides binding method comprising spraying the above aqueous heat-curable binder composition on the fibrous materials; and heat-curing the binder composition.

### [Advantageous Effects]

The fibrous material products bound by the binder composition of the present invention feature the same or better physical properties with lower price compared to traditional phenol formaldehyde resin (PFR), do not include or release toxic materials such as formaldehyde or phenol, may decrease intoxication which is a vulnerable point of traditional PFR during manufacturing and remarkably enhance the mechanical properties such as water resistance, tensile strength and hardness of the manufactured product.

### [Mode for Invention]

Hereinafter, the present invention will be described in more detail.

The binder composition of the present invention includes one or more reducing sugars. The reducing sugar of the present invention refers to aldose or ketose saccharides which have aldehyde or which may have aldehyde structure by isomerization. More specifically, monosaccharide or disaccharide such as glucose, maltose, fructose, lactose, cellobiose, gentiobiose, and rutinose may be used individually or combined, but the reducing sugar is not limited thereto.

The amount of reducing sugar comprised in the binder composition of the present invention is preferably 40∼95 parts by weight, or more preferably 60∼90 parts by weight, or even more preferably 70∼90 parts by weight based on a total of 100 parts by weight of reducing sugar and amino acid. When the content of reducing sugar in the binder composition is less than 40 parts by weight based on a total of 100 parts by weight of reducing sugar and amino acid, the hardness of cured product formed by the binder composition may decline, and when the content of reducing sugar is more than 95 parts by weight, the stability and degree of cure of the cured products may decline.

The binder composition of the present invention comprises one or more amino acids. According to the present invention, amino acid is a compound having one or more amino groups and one or more carboxyl groups-specifically, glycine, alanine, valine, leucine, isoleucine, threonine, serine, cysteine, methionine, aspartic acid, asparagine, glutamic acid, diodine tyrosine, lysine, arginine, histidine, phenylalanine, tyrosine, tryptophan, proline, oxyproline and glutamine may be used individually or combined, but is not limited thereto.

The amount of amino acid comprised in the present invention is preferably 5∼60 parts by weight, or more preferably 10∼40 parts by weight, or even more preferably 10∼30 parts by weight based on total 100 parts by weight reducing of sugar and amino acid. When the content of amino acid in binder composition isless than 5 parts by weight based on total 100 parts by weight reducing sugar and amino acid, , the stability and degree of cure of the cured product may decline, and when it is more than 60 parts by weight, the hardness of cured product formed by binder composition may decline.

According to one embodiment of the present invention, in order to increase the solubility of amino acid to water, amino acid where in a part or the entire (for example, amino group included in amino acid is 20∼100% equivalent, preferably 30∼100% equivalent) amino group is neutralized by acid is preferably used. The examples of acids used to neutralize amino acid are sulfuric acid, phosphoric acid, carboxylic acid, organic sulfonic acid, and any forms of acid compounds may be used, such as unimolecular, dimer, trimer, oligomer, or polymer. In certain cases, the amino acid may be neutralized by amine compounds or ammonia. Preferably, acid compound wherein the boiling point is higher than 300°C (for example, 300∼500°C) under room temperature and normal pressure condition (25°C, 1 atm) may be used.

The reducing sugar and amino acid which is the main component of the present invention is obtained by hydrolysis or fermentation process from starch or molasses earned from plant. Therefore, depletion of the resources would not be a problem, wherein the amount of carbon dioxide may be minimized during manufacturing or discarding. Furthermore, during the product manufacturing process and in the final product, toxic materials such as phenol and formaldehyde are neither included nor formed, which makes it ecofriendly.

The binder composition of the present invention comprises one or more metal cation complex having oxidation number of 2 or higher in the form of ammonium salt. Those having a water solubility of 5% by weight (for example, 5∼50% by weight) may preferably be used. When the water-solubility of the complex with metal cation having oxidation number of 2 or higher is too low, insufficient curability may result since the metal complex is not dissolved when making the binder solution, or adhesion function may be lost as insoluble chelate is formed before the application on the fibrous materials.

The above metal cation compound having oxidation number of 2 or higher is in the form of ion bonded between metal cation having oxidation number of 2 or higher and anion of organic or inorganic acid. As examples of the above metal elements, one or more may be selected from the group consisting of Co, Cu, Ni, Cd, Mn, Mg, Zn, Fe, Al and Zr, and as examples of the above organic or inorganic anion, one or more may be selected from a group consisting of halogen anion, sulfuric acid anion, carbonic acid anion, phosphoric acid anion, nitric acid anion, thiocyanate anion and organic acid anion. The complex including metal cation having oxidation number of 2 or higher are in the form of ammonium salt and thus include ammonium salt. They are used for pH control, for preventing the corrosion of facilities, enhancement of water solubility, and stability of adhesive solution.

Concrete examples of complex of metal cation having oxidation number of 2 or higher are; ammonium cobalt (II) thiocyanate, ammonium cobalt (II) sulfate, ammonium cobalt (II) phosphate, ammonium copper (II) sulfate, ammonium copper (II) carbonate, ammonium nickel (II) sulfate, ammonium nickel (II) phosphate, ammonium manganese (II) sulfate, ammonium manganese (III) diphosphate, ammonium manganese (II) phosphate, ammonium zinc (II) sulfate, ammonium zinc (II) phosphate, ammonium zinc (II) carbonate, ammonium iron (II) sulfate, ammonium iron (III) sulfate, ammonium iron (III) citrate, ammonium iron (II) phosphate, ammonium iron (III) phosphate, ammonium aluminum (III) sulfate, ammonium aluminum (III) phosphate, ammonium aluminum (III) carbonate, ammonium zirconium (IV) sulfate, ammonium zirconium (IV) phosphate and ammonium zirconium (IV) carbonate, and one or more selected from a group consisted of hydrates thereof, but the above examples do not limit the available metal complex which may be used in the present invention. In other words, various metal cations having oxidation number of 2 or higher may combine with various kinds of anions to form soluble compounds, and all of these may be included in the scope of the present invention.

In the binder the amount of complex compound of metal cation having oxidation number of 2 or higher in the form of ammonium salt is based on a total of 100 parts by weight of reducing sugar and amino acid, preferably 0.1∼5 parts by weight, or more preferably 0.1∼3 parts by weight, or even more preferably 0.1∼1 parts by weight. When the amount of complex comprised in the binder composition of the present invention which includes metal cation having oxidation number of 2 or higher is less than 0.1 parts by weight based on a total of 100 parts by weight of reducing sugar and amino acid, the physical properties such as water resistance may decline due to insufficient formation of the complex by coordinate bondings between the ionic compound and other organic binder compositions, and when it is more than 5 parts by weight, the adhesive cured product may be easily broken or unreacted curable ionic materials may remain, which can also affect the physical properties of the product in an undesirable way.

Preferably, the binder composition of the present invention may additionally comprise acid compound wherein its boiling point is higher than 300°C (for example, 300∼500°C) under room temperature and normal pressure condition (25°C, 1 atm). These acid compounds with high boiling point increase the solubility of amino acid in water, may be used to increase the curing rate during the baking process after application in the fibrous assembly, and in order to inhibit volatilization through curing reaction, it is preferable that the boiling point under room temperature and normal pressure condition be 300°C or higher. Sulfuric acid, phosphoric acid, carboxylic acid and organic sulfonic acid are concrete examples of acid compounds with high boiling points and any form of acid compounds may be used, such as unimolecular, dimer, trimer, oligomer, or polymer. In some cases, such acid compounds may be used in forms neutralized by amine compounds or ammonia.

In a case wherein the binder composition of the present invention comprises acid compound with high boiling point, it amounts to, based on a total of 100 parts by weight of reducing sugar and amino acid, preferably 0.1∼10 parts by weight, more preferably 0.1∼5 parts by weight, even more preferably 0.1∼3 parts by weight. When the content of acid compound in the binder composition is less than 0.1 parts by weight based on a total of 100 parts by weight of reducing sugar and amino acid, sufficient curing may not occur which leads to inferior physical properties of the cured product, and when it is more than 10 parts by weight, fragile cure products may be formed.

The binder composition of the present invention may comprise components under circumstances to achieve the purpose, and may selectively include one or more additives when necessary. As useful additives, a water repellent to increase the water resistance of fibrous assembly, anti-rust additive to inhibit the rusting of facilities, dust oil to decrease the formation of dust in products, buffer to control the pH or coupling additive to enhance the adhesion may be used. However, it is not limited thereto, and any additive widely used in this field may be used as well. There are no particular limitations on additional additives, based on a total of 100 parts by weight of reducing sugar and amino acid, and each additive may be used in a range of 0.1∼10 parts by weight, but is not limited thereto.

The binder composition of the present invention may control the solid content as 2∼50% by weight, preferably 5∼20% by weight (in other words, based on the whole 100% by weight of the composition, the content of water is 50∼98% by weight, preferably 80∼95% by weight) by using diluents such as water (industrial water, underground water, waste water) to evenly apply the above components on the fibrous materials. When there is too much water as a diluent, excessive energy may be consumed to volatile water, but when there is too little water, the binder composition may be not applied well on the fibrous materials, and therefore binder content in the final product is unnecessarily high which is not desirable.

When the binder composition of the present invention is heat-treated, for example at a temperature of 120°C or higher, various curing reactions-such as Maillard reaction which occurs at amadori intermediate between aldehyde group of reducing sugar and amine group of amino acid, amide reaction between carboxylic acid group and amine group of the amino acid, ester reaction between hydroxyl group of reducing sugar and carboxylic acid group of amino acid, coordinate bond between metal ion and nitrogen, oxygen, sulfur, and halogen elements at reducing sugar or amino acid compound-can occur, and as a result water-insoluble polymer is formed, which makes it a useful adhesive with highly outstanding physical properties such as water resistance.

Therefore, in another aspect, the present invention provides binding method comprising spraying aqueous heat-curable binder composition on fibrous materials; and heat-curing the sprayed binder composition, and also provides fibrous materials bound by the aqueous heat-curable binder composition of the present invention.

According to the method for binding fibrous materials of the present invention, the above aqueous heat-curable binder composition is sprayed on the fibrous materials in forms of uncured solution or aqueous dispersion. Filament assemblies such as mineral fiber (for example, rock wool, glass wool, ceramic fiber etc.) or fiber obtained from natural and synthetic resins may be concrete examples of the above fibrous materials, but are not limited thereto.

Moreover, the fibrous material assembly wherein binder composition is applied is heat-cured through heat-treatment. The heat-treatment temperature for curing is appropriate at 120°C or higher (for example, 120∼300°C, preferably 150∼250°C). When the heat treatment temperature is too low, insufficient curing occurs, but when it is too high, over-curing occurs which might lead to problems related to formation of dust.

The cured binder content in fibrous materials manufactured by the present invention may be, based on 100 parts by weight of bound fibrous materials-for example, 2 to 15% by weight.

### [Best Mode]

Hereinafter, the present invention will be described in more detail with reference to the following examples, but the scope of the present invention should not be construed to be limited thereby in any manner.

### [Examples]

### Example 1

376kg of glucose (D-glucose)(solid content: 91% by weight), 61kg of glutamine (solid content: 98% by weight), 3kg of ammonium sulfate (solid content: 98% by weight), 2.4kg of ammonium zirconium (IV) carbonate, (Bercen INC-Berset 2720) (solid content: 32% by weight), 3kg of dust oil (Govi-Garo217S), 2kg of silicone water repellent (silicone-based water repellent) (KCC-SI1460Z) and 4050kg of distilled water were put into the mixing vessel, and binder was prepared by stirring the vessel for 30 minutes with an agitator. The solid content of the obtained binder was 9% by weight.

### Example 2

Except that 2.6kg of ammonium zinc (II) carbonate (KCC-CVB00886) (solid content: 30% by weight) was used instead of ammonium zirconium (IV) carbonate, a binder was prepared by the process of Example 1. The solid content of the obtained binder was approximately 9% by weight.

### Example 3

Except that 0.8kg of ammonium iron (II) sulfate hexahydrate (JUNSEI company) (solid content: 99% by weight) was used instead of ammonium zirconium (IV) carbonate, a binder was prepared by the process of Example 1. The solid content of the obtained binder was approximately 9% by weight.

### Example 4

376kg of glucose (D-glucose) (solid content: 91% by weight), 116kg of liquid state lysine (L-lysine) (solid content: 50% by weight), 5kg of sulfuric acid (98%), 0.8kg of ammonium iron (III) sulfate dodecahydrate (JUNSEI Company) (solid content: 99% by weight, 3kg of dust oil (Govi-Garo217S), 2kg of water repellent (KCC-SI1460Z) and 4050kg of distilled water were put into the mixing vessel, and binder was prepared by stirring the vessel for 30 minutes with an agitator. The solid content of the obtained binder was approximately 9% by weight.

### Example 5

376kg of glucose (D-glucose) (solid content: 91% by weight), 102kg of solid state lysine (L-lysine) neutralized by sulfuric acid (solid content: 98% by weight), 0.8kg of ammonium aluminum (III) sulfate dodecahydrate (Sigma-Aldrich Company) (solid content: 99% by weight), 3kg of dust oil (Govi-Garo217S), 2kg of water repellent (KCC-SI1460Z) and 4050kg of distilled water were put into the mixing vessel, and binder was prepared by stirring the vessel for 30 minutes with an agitator. The solid content of the obtained binder was 9% by weight.

### Comparative Example 1: Preparing a binder by using phenol/formaldehyde resin

404kg of phenol/formaldehyde resin (manufactured by KCC Company), 3800kg of distilled water, 2kg of water repellent (SI1460Z-KCC) and 3kg of dust oil (Garo217S) were put into the mixing vessel agitator, and binder was prepared by stirring the vessel for 30 minutes with an agitator. The solid content of the obtained binder was 9% by weight.

### Comparative Example 2: Preparing a binder by using polycarboxylic acid (Example 1 of Korean Laid-open Patent of No. 2008-0049012)

158kg of glucose (D-glucose) (solid content: 91% by weight), 44kg of citric acid (solid content: 98% by weight), 50kg of ammonia water (25%), 3750kg of distilled water, 2kg of water repellent (SI1460Z-KCC) and 3kg of dust oil (Garo217S) were put into the mixing vessel, and binder was prepared by stirring the vessel for 30 minutes with an agitator. The solid content of the obtained binder was 4.5% by weight.

### Comparative Example 3: Preparing a binder by using water-insoluble metal salt

376kg of glucose (D-glucose) (solid content: 91% by weight), 61kg of glutamine (solid content: 98% by weight), 3kg of ammonium sulfate (solid content: 98% by weight), 1.0kg of calcium hydroxide (Sigma-Aldrich Company) (solid content: 95% by weight), 3kg of dust oil (Garo217S), 2kg of water repellent (KCC-SI1460Z) and 4050kg of distilled water were put into the mixing vessel, and binder was prepared by stirring the vessel for 30 minutes with an agitator. The solid content of the obtained binder was 9% by weight.

### Comparative Example 4: Preparing a binder without using the ionic compound including amino acid and metal cation (Example 1 of Korean Laid-open Patent No. 2010-0065273)

171.7kg of glucose (D-glucose) (solid content: 91% by weight), 30.3kg of ammonium sulfate (solid content: 98% by weight), 10kg of ammonia water (25%), 3790kg of distilled water, 3kg of dust oil (Garo217S) and 2kg of water repellent (KCC-SI1460Z) were put into the mixing vessel, and binder was prepared by stirring the vessel for 30 minutes with an agitator. The solid content of the obtained binder was 4.5% by weight.

### Experimental Example: Binding fibrous materials using binders

Melted glass of high temperature was fiberized at a rate of 2100 kg/hr by passing through a spinner, and each binder, prepared in the above Examples 1 to 5 and Comparative Examples 1 to 4, was respectively sprayed by the rate of 47L/min on the glass fiber which came to the collecting vessel. After the drying process, glass wool insulator was obtained. Because of precipitation of calcium hydroxide, the binder of Comparative Example 3 was sprayed after filtering the binder solution by the 150 mesh stainless filter for removing the mass, and the rest of the process was the same as the others.

The below tests were done to each of the glass wools prepared.

### Water Resistance

The glass wool sample of 100mm (width) × 100mm (height) × 50mm (thickness) was prepared, and water resistance was tested for the standardized 48 hours. The sample was put to float in pure water in the beaker, and the time consumed for the sample to completely sink down was measured. The poorer the water resistance was, the closer it was graded to 0, and the more it was outstanding, the closer it was graded to 5. In the cases of Examples 1, 4 and 5, and Comparative Example 1, each sample stayed afloat for more than 72 hours, but in the cases of Comparative Examples 3 and 4, each sample sunk in less than 24 hours. The test results are shown in Table 1.

### Immersion

The glass wool sample of 100mm (width) × 100mm (height) × 50mm (thickness) was prepared, and immersion was tested by the standardized 72 hours. The sample was fully immersed in a 2L beaker completely filled with pure water, and the change in the color was measured. The change of the color was numerically digitized by the color change, depending on the concentration. The poorer submersion was, the closer it was graded to 0, and the more it was outstanding, the closer it was graded to 5. In cases of Examples 1 to 5, each sample did not show much color change for more than 72 hours, but in the cases of Comparative Examples 3 and 4, each sample showed serious color change in only a few hours. The test results are shown in Table 1.

### Amount of Formaldehyde Released

By the small chamber method, a specimen was put into a small chamber, and the air inside the chamber was collected after 7 days. The collected air was examined by HPLC (High Performance Liquid Chromatography). More detailed method follows the method set by Korea Air Cleaning Association, and the results were analyzed on the 7^{th} day. The test results are shown in Table 1.

### Tensile Strength

All 3 of the measuring samples were prepared in a size of 4cm. The draw bar was placed shorter than the length of the sample, and the sample was fixed on the draw bar perpendicularly, making the sample perpendicular to the rod. The speed of the tensile strength tester was 15mm/min, and the scale was set to zero in the rod display. The tester was then operated. The maximum load displayed after the tester automatically stopped was measured, and the average value was calculated. The test results are shown in Table 1.

### Dust Rate

Four measuring samples were prepared, each of them 1.5cm wide and 10cm long. The sample was weighed before measuring, placed on the rust rate measuring meter, and the sample was shaken in every direction at a rate of 1m/min. The total measuring time was 10 minutes for each sample, and when the tester was automatically stopped, the sample was weighed. The dust rate was represented in % and calculated by the following formula: dust rate = [(weight after the measurement / weight before the measurement) - 1]*100. In tests of glass wool prepared by using each of the binders of Examples 1 to 5, less dust was found compared to the cases where the binder of the comparative examples were used. The test results are shown in Table 1.

### Restoration Rate

A glass wool sample of 10m (width)×1m (height)×0.05m (thickness) was prepared and kept at room temperature in a rolled form for 8 weeks. After 8 weeks, the change of thickness of the sample was examined after being unrolled. The test results are shown in Table 1 below.

### Mold Resistance

The mold resistance was measured by the ASTM G21-09 test method, and the mold growth rate of the specimen was measured after a one-month observation. The results are shown in Table 1 below.

**[Table 1]**

| | Examples of Binders | | | | | Comparative Examples of Binders | | | |
|---|---|---|---|---|---|---|---|---|---|
| | 1 | 2 | 3 | 4 | 5 | 1 | 2 | 3 | 4 |
| Water Resistance | 5 | 4 | 4 | 5 | 5 | 5 | 4 | 3 | 3 |
| Immersion | 5 | 5 | 5 | 5 | 5 | 4 | 4 | 3 | 3 |
| Amount of Formaldehyde Released | 0 | 0 | 0 | 0 | 0 | 0.035 | 0 | 0 | 0 |
| Tensile Strength (kgf/cm²) | 0.27 | 0.24 | 0.23 | 0.28 | 0.3 | 0.25 | 0.2 | 0.15 | 0.13 |
| Dust Rate (%) | 0.6 | 0.7 | 0.7 | 0.5 | 0.4 | 0.5 | 1.8 | 2.3 | 2.5 |
| Restoration Rate (%) | 100% or more | 100% or more | 100% or more | 100% or more | 100% or more | 100% or more | 100% or more | 100% or more | 100% or more |
| Mold Resistance | Good | Good | Good | Good | Good | Good | Good | Good | Good |

## Claims

1. An aqueous heat-curable binder composition comprising:
one or more reducing sugars;
one or more amino acids; and
one or more complex compounds of metal cation having oxidation number of 2 or higher in the form of ammonium salt.

2. The aqueous heat-curable binder composition according to claim 1, wherein the reducing sugar is selected from glucose, maltose, fructose, lactose, cellobiose, gentiobiose, rutinose and combinations thereof.

3. The aqueous heat-curable binder composition according to claim 1, wherein the amino acid is selected from glycine, alanine, valine, leucine, isoleucine, threonine, serine, cysteine, methionine, aspartic acid, asparagine, glutamic acid, diodine tyrosine, lysine, arginine, histidine, phenylalanine, tyrosine, tryptophan, proline, oxyproline, glutamine and combinations thereof.

4. The aqueous heat-curable binder composition according to claim 1, wherein a part or the entire amino group of the amino acid is neutralized by acid.

5. The aqueous heat-curable binder composition according to claim 1, wherein the water solubility of the complex compound of metal cation having oxidation number of 2 or higher in the form of ammonium salt is 5% or more by weight.

6. The aqueous heat-curable binder composition according to claim 1, wherein the complex compound of metal cations having oxidation number of 2 or higher in the form of ammonium salt comprises one or more cations selected from a group consisting of Co, Cu, Ni, Cd, Mn, Mg, Zn, Fe, Al and Zr; and one or more anions selected from a group consisting of halogen anion, sulfuric acid anion, carbonic acid anion, phosphoric acid anion, nitric acid anion, thiocyanate anion and organic acid anion.

7. The aqueous heat-curable binder composition according to claim 6, wherein the complex compound of metal cations having oxidation number of 2 or higher in the form of ammonium salt is one or more selected from the group consisting of ammonium cobalt (II) thiocyanate, ammonium cobalt (II) sulfate, ammonium cobalt (II) phosphate, ammonium copper (II) sulfate, ammonium copper (II) carbonate, ammonium nickel (II) sulfate, ammonium nickel (II) phosphate, ammonium manganese (II) sulfate, ammonium manganese (III) diphosphate, ammonium manganese (II) phosphate, ammonium zinc (II) sulfate, ammonium zinc (II) phosphate, ammonium zinc (II) carbonate, ammonium iron (II) sulfate, ammonium iron (III) sulfate, ammonium iron (III) citrate, ammonium iron (II) phosphate, ammonium iron (III) phosphate, ammonium aluminum (III) sulfate, ammonium aluminum (III) phosphate, ammonium aluminum (III) carbonate, ammonium zirconium (IV) sulfate, ammonium zirconium (IV) phosphate and ammonium zirconium (IV) carbonate.

8. The aqueous heat-curable binder composition according to claim 1, further comprising acid compound which has a boiling point higher than 300°C under room temperature and normal pressure condition.

9. A method for binding fibrous materials, comprising:
spraying the aqueous heat-curable binder composition according to any of claims 1 to 8 on fibrous materials; and heat-curing the binder composition.

10. The fibrous materials bound by using the aqueous heat-curable binder composition according to any of claims 1 to 8.

## Patentansprüche

1. Wässrige, wärmehärtbare Bindemittelzusammensetzung, umfassend:
einen oder mehrere reduzierende Zucker;
eine oder mehrere Aminosäuren; und
eine oder mehrere Komplexverbindungen eines Metallkations mit einer Oxidationszahl von 2 oder höher in der Form eines Ammoniumsalzes.

2. Wässrige, wärmehärtbare Bindemittelzusammensetzung nach Anspruch 1, wobei der reduzierende Zucker ausgewählt ist aus Glucose, Maltose, Fructose, Lactose, Cellobiose, Gentiobiose, Rutinose und Kombinationen davon.

3. Wässrige, wärmehärtbare Bindemittelzusammensetzung nach Anspruch 1, wobei die Aminosäure ausgewählt ist aus Glycin, Alanin, Valin, Leucin, Isoleucin, Threonin, Serin, Cystein, Methionin, Asparaginsäure, Asparagin, Glutaminsäure, Diiodtyrosin, Lysin, Arginin, Histidin, Phenylalanin, Tyrosin, Tryptophan, Prolin, Oxyprolin, Glutamin und Kombinationen davon.

4. Wässrige, wärmehärtbare Bindemittelzusammensetzung nach Anspruch 1, wobei ein Teil der oder die gesamte Aminogruppe der Aminosäure durch Säure neutralisiert ist.

5. Wässrige, wärmehärtbare Bindemittelzusammensetzung nach Anspruch 1, wobei die Wasserlöslichkeit der Komplexverbindung des Metallkations mit einer Oxidationszahl von 2 oder höher in der Form eines Ammoniumsalzes 5 Gew.-% oder mehr beträgt.

6. Wässrige, wärmehärtbare Bindemittelzusammensetzung nach Anspruch 1, wobei die Komplexverbindung der Metallkationen mit einer Oxidationszahl von 2 oder höher in der Form eines Ammoniumsalzes ein oder mehrere Kationen ausgewählt aus einer Gruppe bestehend aus Co, Cu, Ni, Cd, Mn, Mg, Zn, Fe, Al und Zr; und ein oder mehrere Anionen ausgewählt aus einer Gruppe bestehend aus Halogen-Anion, Schwefelsäure-Anion, Carbonsäure-Anion, Phosphorsäure-Anion, Salpetersäure-Anion, Thiocyanat-Anion und organisches Säure-Anion umfasst.

7. Wässrige, wärmehärtbare Bindemittelzusammensetzung nach Anspruch 6, wobei die Komplexverbindung von Metallkationen mit einer Oxidationszahl von 2 oder höher in der Form eines Ammoniumsalzes eine oder mehrere ausgewählt aus der Gruppe bestehend aus Ammonium-Kobalt(II)-thiocyanat, Ammonium-Kobalt(II)-sulfat, Ammonium-Kobalt(II)-Phosphat, Ammonium-Kupfer(II)-sulfat, Ammonium-Kupfer(II)-carbonat, Ammonium-Nickel(II)-sulfat, Ammonium-Nickel(II)-phosphat, Ammonium-Mangan(II)-sulfat, Ammonium-Mangan(III)-diphosphat, Ammonium-Mangan(II)-phosphat, Ammonium-Zink(II)-sulfat, Ammonium-Zink(II)-phosphat, Ammonium-Zink(II)-carbonat, Ammonium-Eisen(II)-sulfat, Ammonium-Eisen(III)-sulfat, Ammonium-Eisen(III)-citrat, Ammonium-Eisen(II)-phosphat, Ammonium-Eisen(III)-phosphat, Ammonium-Aluminium(III)-sulfat, Ammonium-Aluminium(III)-phosphat, Ammonium-Aluminium(III)-carbonat, Ammonium-Zirkonium(IV)-sulfat, Ammonium-Zirkonium(IV)-phosphat und Ammonium-Zirkonium(IV)-Carbonat sind.

8. Wässrige, wärmehärtbare Bindemittelzusammensetzung nach Anspruch 1, ferner umfassend eine Säureverbindung, die einen Siedepunkt von über 300°C unter Raumtemperatur- und Normaldruckbedingungen aufweist.

9. Verfahren zur Bindung von Fasermaterialien, umfassend:
Aufsprühen der wässrigen, wärmehärtbaren Bindemittelzusammensetzung nach einem der Ansprüche 1 bis 8 auf Fasermaterialien; und Wärmehärten der Bindemittelzusammensetzung.

10. Fasermaterialien, die unter Verwendung einer wässrigen, wärmehärtbaren Bindemittelzusammensetzung nach einem der Ansprüche 1 bis 8 gebunden sind.

## Revendications

1. Composition aqueuse de liant thermodurcissable, comprenant :
un ou plusieurs sucres réducteurs ;
un ou plusieurs acides aminés ; et
un ou plusieurs composés complexes de cation métallique, ayant un nombre d'oxydation égal ou supérieur à 2 sous forme de sel d'ammonium.

2. Composition aqueuse de liant thermodurcissable selon la revendication 1, dans laquelle le sucre réducteur est choisi parmi le glucose, le maltose, le fructose, le lactose, le cellobiose, le gentiobiose, le rutinose et leurs combinaisons.

3. Composition aqueuse de liant thermodurcissable selon la revendication 1, dans laquelle l'acide aminé est choisi parmi glycine, alanine, valine, leucine, isoleucine, thréonine, sérine, cystéine, méthionine, acide aspartique, asparagine, acide glutamique, diiodotyrosine, lysine, arginine, histidine, phénylalanine, tyrosine, tryptophane, proline, oxyproline, glutamine et leurs combinaisons.

4. Composition aqueuse de liant thermodurcissable selon la revendication 1, dans laquelle une partie ou la totalité du groupe amine de l'acide aminé est neutralisée par un acide.

5. Composition aqueuse de liant thermodurcissable selon la revendication 1, dans laquelle la solubilité dans l'eau du composé complexe de cation métallique ayant un nombre d'oxydation égal ou supérieur à 2 sous forme de sel d'ammonium est de 5 % en poids ou plus.

6. Composition aqueuse de liant thermodurcissable selon la revendication 1, dans laquelle le composé complexe des cations métalliques ayant un nombre d'oxydation égal ou supérieur à 2 sous forme de sel d'ammonium comprend un ou plusieurs cations choisis dans le groupe constitué par Co, Cu, Ni, Cd, Mn, Mg, Zn, Fe, Al et Zr; et un ou plusieurs anions choisis dans un groupe constitué par un anion halogène, un anion acide sulfurique, un anion acide carbonique, un anion acide phosphorique, un anion acide nitrique, un anion thiocyanate et un anion acide organique.

7. Composition aqueuse de liant thermodurcissable selon la revendication 6, dans laquelle le composé complexe des cations métalliques ayant un nombre d'oxydation égal ou supérieur à 2 sous forme de sel d'ammonium est un ou plusieurs choisis dans le groupe constitué par thiocyanate d'ammonium de cobalt(II), sulfate d'ammonium de cobalt(II), phosphate d'ammonium de cobalt(II), sulfate d'ammonium de cuivre(II), carbonate d'ammonium de cuivre(II), sulfate d'ammonium de nickel(II), phosphate d'ammonium de nickel(II), sulfate d'ammonium de manganèse(II), diphosphate d'ammonium de manganèse(III), phosphate d'ammonium de manganèse(II), sulfate d'ammonium de zinc(II), phosphate d'ammonium de zinc(II), carbonate d'ammonium de zinc(II), sulfate d'ammonium de fer(II), sulfate d'ammonium de fer(III), citrate d'ammonium de fer(III), phosphate d'ammonium de fer(II), phosphate d'ammonium de fer(III), sulfate d'ammonium d'aluminium(III), phosphate d'ammonium d'aluminium(III), carbonate d'ammonium d'aluminium(III), sulfate d'ammonium de zirconium(IV), phosphate d'ammonium de zirconium(IV), et carbonate d'ammonium de zirconium(IV).

8. Composition aqueuse de liant thermodurcissable selon la revendication 1, en outre comprenant un composé d'acide ayant un point d'ébullition supérieur à 300°C à des conditions de température ambiante et pression normale.

9. Procédé pour lier des matériaux fibreux, le procédé comprenant les étapes consistant à :
pulvériser la composition aqueuse de liant thermodurcissable selon l'une quelconque des revendications 1 à 8 sur des matériaux fibreux ; et durcir à chaud la composition de liant.

10. Matériaux fibreux liés en utilisant la composition aqueuse de liant thermodurcissable selon l'une quelconque des revendications 1 à 8.
